# EUROPEAN PATENT APPLICATION

(11) **EP 2 750 096 A1**
(43) Date of publication of application: **02.07.2014**
(21) Application number: 13275179.3
(22) Date of filing: 31.07.2013
(51) Int. Cl.: G06Q 30/06

(54) **Electronic shelf labeling system and method of operating the same**

(30) Priority: 28.12.2012 KR 20120157027
(71) Applicant: Samsung Electro-Mechanics Co., Ltd., Gyunggi-do (KR)
(72) Inventor: Sung, Jong Woo, Gyunggi-do (KR); Kim, Hyun Hak, Gyunggi-do (KR); Na, Young II, Gyunggi-do (KR); Park, Sung II, Gyunggi-do (KR); Lee, Yun Jong, Gyunggi-do (KR)
(74) Representative: Potter Clarkson LLP

(57) **Abstract**

There are provided an electronic shelf labeling system and a method of operating the same. The method is performed in an electronic shelf label gateway capable of wirelessly communicating with a plurality of electronic shelf label tags and providing data provided by an electronic shelf label server to the plurality of electronic shelf label tags. The method includes providing, to the plurality of electronic shelf label tags, a first sleep message including time remaining until a first wake-up point, selecting at least one update tag to which update data is to be provided, from the plurality of electronic shelf label tags, and when the first wake-up point arrives, providing, to the least one update tag, the update data and a second sleep message including time remaining until a second wake-up point

## Description

### CROSS-REFERENCE TO RELATED APPLICATIONS

This application claims the priority of Korean Patent Application No. 10-2012-0157027 filed on December 28, 2012, in the Korean Intellectual Property Office, the disclosure of which is incorporated herein by reference.

### BACKGROUND OF THE INVENTION

### Field of the Invention

The present invention relates to an electronic shelf labeling system capable of preventing repetitive transmission of a wakeup message and preventing collisions of the wakeup message in wireless communications.

### Description of the Related Art

In accordance with an advancement of tag technology and local area wireless communications, various systems based on tags have been provided. One example of the above-mentioned tag based systems is an electronic shelf labeling system, wherein the electronic shelf labeling system is variously applied to an environment such as a hypermarket or the like, providing a wide range of articles.

The above-mentioned electronic shelf labeling system may be provided by establishing a wireless personal area network based on local area wireless communications technology such as ZigBee or the like. Since it may be difficult to use a pre-assigned frequency band in a wireless personal area network, a wireless personal area network needs to operate in a limited frequency band. Therefore, an electronic shelf labeling system using a wireless personal area network also has the limitation of a limited frequency band.

An existing sensor network operates in a manner in which, when an event occurs, a sensor node collects the event and sends the collected event to a gateway. In the case of the ZigBee standard, the standard conforms to a data transmission model (for example, a PULL mode in which the tag requests data from the gateway) which is based on a tag rather than being based on a server. The data transmitted in an application is completely controlled by the tag, rather than the gateway. This is the basic and efficient method of significantly reducing energy expended by the tag, since the tag implements a duty cycle periodically changing between a sleep state and a wakeup state and operating at relatively low power. Since most sensor network applications transmit data collected by the sensor node to the gateway using wireless communications, the tag determines a point at which the transmission is required (when there is sensing data which needs the transmission or a certain event is sensed). However, since an electronic shelf label (ESL) mainly uses wireless communications in a scheme in which a server transmits a price to the tag through the gateway, downstream-oriented communications to a device such as the ESL need a scheme different from an existing upstream based communications model.

In addition, in an existing data transmission model based on the tag, the electronic shelf system should have a scheme in which the gateway repeatedly transmits the wakeup message with a relatively short period between wakeup message transmissions using wakeup channel, because it does not know a point at which the tag of the sleep state is awakened, and in which the tag receiving the wakeup message requests the communications of the gateway using data channel. To this end, a separate frequency band(wakeup channel) transmitting the wakeup message should be assigned, . Therefore, the probability of a collision in the frequency band as well as limitations on power management of electronic tags existed.

The following related art documents relate to the above-mentioned related technologies and do not propose solutions for the foregoing frequency band problem and the power management of the electronic tag.

### [Related Art Document]

Korean Patent No. 10-1001913
Korean Patent Laid-Open Publication No. 2012-0077450

### SUMMARY OF THE INVENTION

An aspect of the present invention provides an electronic shelf labeling system capable of avoiding repeatedly transmitting a wakeup message by only transmitting an update message to a corresponding tag at a point at which the tag is awoken by transmitting a sleep command including time remaining until a wakeup point to the tag by a gateway, to schedule the point at which the tag is awoken, and efficiently managing a frequency band by using a top down scheme in which a server provides the data to the tag through the gateway, without using a bottom up scheme in which the tag receiving the wakeup message unnecessarily requests transmission of data from the gateway, and a method of operating the same.

According to an aspect of the present invention, there is provided a method of operating an electronic shelf labeling system performed in an electronic shelf label gateway capable of wirelessly communicating with a plurality of electronic shelf label tags and providing data provided by an electronic shelf label server to the plurality of electronic shelf label tags, the method including: providing, to the plurality of electronic shelf label tags, a first sleep message including time remaining until a first wake-up point; selecting at least one update tag to which update data is to be provided, from the plurality of electronic shelf label tags; and when the first wake-up point arrives, providing, to the least one update tag, the update data and a second sleep message including time remaining until a second wake-up point.

The providing of the first sleep message may include: calculating the time remaining from a current time to the first wake-up point; generating the first sleep message including the calculated remaining time; and broadcasting the generated first sleep message to the plurality of electronic shelf label tags.

The providing of the second sleep message may include: sequentially providing, the update data to the respective at least one update tag; and broadcasting to the plurality of electronic shelf label tags, the second sleep message including the time remaining from the current time to the second wake-up point.

The providing of the second sleep message may further include repeatedly broadcasting the second sleep message at a predetermined interval of time.

The providing of the second sleep message may include sequentially providing the update data and the second sleep message to the respective at least one update tag.

The providing of the second sleep message may include providing, to electronic shelf label tags among the plurality of electronic shelf label tags with the exception of the at least one update tag, the second sleep message including the time remaining from the current time to the second wake-up point.

The providing of the second sleep message may include: checking at least one address identification value commonly included in an address of the least one update tag but not included in addresses of the electronic shelf label tags with the exception of the at least one update tag; and providing the update data or the second sleep message using the at least one address identification value as an identifier.

According to another aspect of the present invention, there is provided a method of operating an electronic shelf labeling system performed in an electronic shelf label tag capable of wirelessly communicating with an electronic shelf label gateway and storing data provided by an electronic shelf label server through the electronic shelf label gateway, the method including: checking time remaining until a wake-up point included in a sleep message when receiving the sleep message; setting the electronic shelf label tag to be in a sleep mode during the checked time remaining; and changing the electronic shelf label tag to be in an active mode when a point at which the electronic shelf label tag is awakened arrives.

The changing of the electronic shelf label tag to be in the active mode may include: calculating the point at which the electronic shelf label tag is awakened, using reception time of the sleep message and the time remaining; and changing the electronic shelf label tag to be in the active mode when current time reaches the point at which the electronic shelf label tag is awakened.

The changing of the electronic shelf label tag to be in the active mode may include: decreasing the time remaining from the reception time of the sleep message; and when the time remaining becomes zero, changing the electronic shelf label tag to be in the active mode.

The method may further include checking an address identification value included in the received sleep message or update data and ignoring the received sleep message or update data when the address identification value does not correspond to an address of the electronic shelf label tag.

According to another aspect of the present invention, there is provided an electronic shelf labeling system, including: a plurality of electronic shelf label tags setting themselves to be in a sleep mode or an active mode using time remaining until a wake-up point included in a received sleep message; at least one gateway generating and providing the sleep message, and wirelessly providing update data to the electronic shelf label tag in the active mode; and an electronic shelf label server providing the update data to the at least one gateway and setting operation scheduling of the at least one gateway.

The electronic shelf labeling system may transmit the sleep message and the update data using different frequency channels.

The electronic shelf labeling system may perform wireless communications in a ZigBee scheme and may provide the update data in a top-down scheme in which the update data is provided to the electronic shelf label tags via the gateway from the electronic shelf label server.

The gateway may select at least one update tag to which the update data is to be transmitted from the plurality of electronic shelf label tags and may transmit the update data by using an address identification value common to the selected at least one update tag.

The gateway may broadcast a sleep message including time remaining until a new wake-up point to the electronic shelf label tags with the exception of the at least one update tag to which the update data is to be transmitted.

The electronic shelf label server may assign a first frequency channel for transmitting the update data, to a plurality of gateways in a time-division scheme, when the gateway is provided in plural.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic view illustrating an electronic shelf labeling system according to an embodiment of the present invention;
FIG. 2 is a schematic view illustrating an electronic shelf label server according to an embodiment of the present invention;
FIG. 3 is a schematic view illustrating an electronic shelf label gateway according to an embodiment of the present invention;
FIG. 4 is a schematic block diagram of an electronic shelf label tag according to an embodiment of the present invention;
FIGS. 5 through 7 are reference views illustrating transmission of a sleep message or update data performed in the electronic shelf labeling system according to the embodiment of the present invention; and
FIGS. 8 and 9 are flow charts illustrating a method of operating an electronic shelf labeling system according to an embodiment of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein.

Rather, these embodiments are provided so that this disclosure will be thorough and complete, and will fully convey the scope of the invention to those skilled in the art.

Therefore, respective operations may be performed in a sequence different from a sequence described below, unless the context clearly defines a specific sequence. That is, the respective operations may be performed in the same sequence as the described sequence of operations, may be performed simultaneously, or may be performed in a sequence opposite to the described sequence.

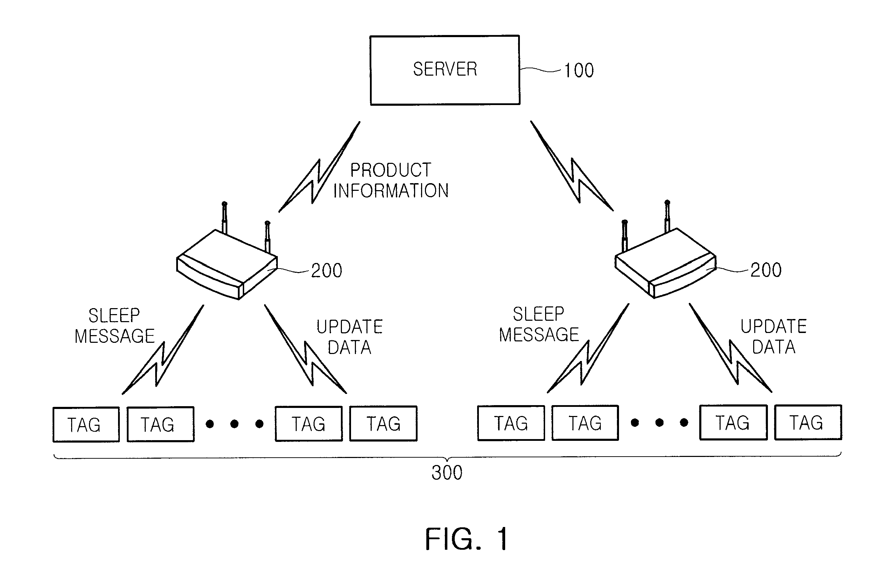

FIG. 1 is a schematic view illustrating an electronic shelf labeling system according to an embodiment of the present invention.

Referring to FIG. 1, the electronic shelf labeling system according to the embodiment of the present invention may include an electronic shelf label server 100, at least one or more electronic shelf label gateways 200 (hereinafter, referred to as 'a gateway'), and a plurality of electronic shelf label tags 300 (hereinafter, referred to as 'tags').

The electronic shelf label server 100 may generally manage the electronic shelf labeling system.

The electronic shelf label server 100 may provide product information to the tags 300 using the at least one gateway 200. The electronic shelf label server 100 and the at least one gateway 200 may be connected to each other in a wired or wireless manner.

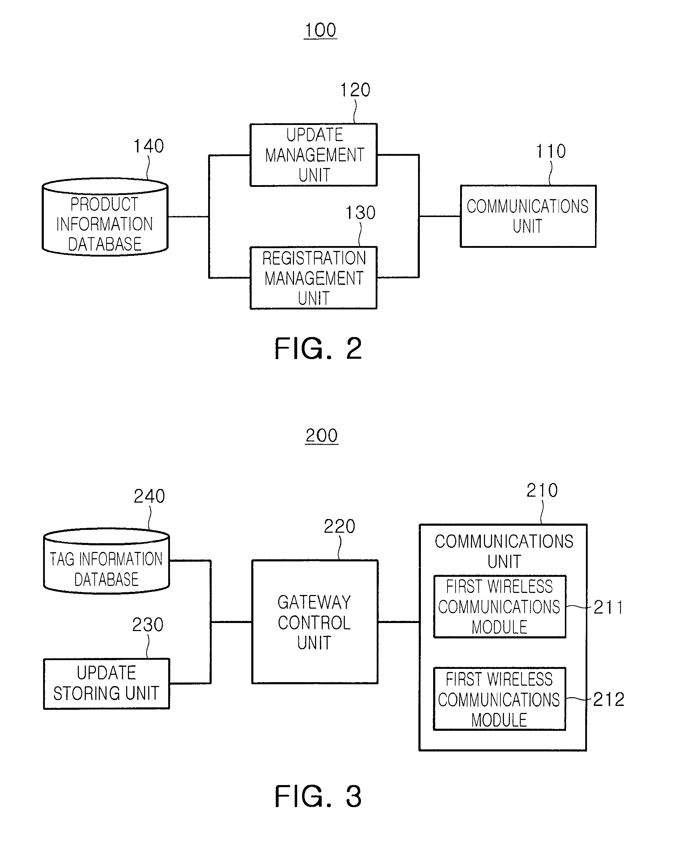

The gateway 200 may transmit predetermined data to the plurality of tags 300 managed by the gateway 200. For example, the gateway 200 may provide a sleep message to the tags 300 or transmit update data to the tags 300. Hereinafter, the provision of the sleep message or the update data will be described in more detail with reference to FIGS. 2 through 7.

The tags 300 may receive the predetermined data from the gateway 200. The tags 300 may display the received data. For example, the tags 300 may provide information for a specific product, such as detailed product information, price information, and the like.

In the embodiment of the present invention, the electronic shelf labeling system may use different frequency channels according to the type of the provided message. For example, the electronic shelf labeling system may wirelessly communicate a sleep message using only a band A frequency and may wirelessly communicate an update message using only a band B frequency. In accordance with the embodiment of the present invention, communications collisions, which may be caused by different types of message transmission and reception, may be prevented.

In the embodiment of the present invention, the electronic shelf labeling system may perform wireless communications in a ZigBee scheme and may use a top down scheme. That is, in the wireless communications of a general ZigBee scheme, update data is requested using a scheme (a bottom up scheme) in which transmission of the update data from the tag 300 side to the gateway or server side is requested. On the other hand, in the embodiment of the present invention, the update data may be transmitted using a top down scheme in which the update data is provided by the server side to the tag side. In the embodiment of the present invention as mentioned above, communications triggers and waiting time of the tag side may be decreased, such that power management of the tag may be efficiently performed.

Hereinafter, the electronic shelf label server 100, the gateway 200, and the tags 300 configuring the foregoing electronic shelf labeling system are described in detail with reference to FIGS. 2 through 4.

FIG. 2 is a schematic view illustrating an electronic shelf label server according to an embodiment of the present invention.

Referring to FIG. 2, the electronic shelf label server 100 may include a communications unit 110, an update management unit 120, a registration management unit 130, and a product information database 140.

The communications unit 110 may set a communications connection with the gateway 200 or a terminal for registration to be described below.

The update management unit 120 may provide the update data to the gateway 200. For example, in the case in which the update data to be provided to a node is present, the electronic shelf label server 100 may provide the update data to a gateway directly communicating with the node. To this end, the electronic shelf label server 100 may store information for the gateway and nodes associated with the gateway.

In the embodiment of the present invention, the update management unit 120 may control frequency channel assignment between a plurality of gateways. More specifically, the update management unit 120 may include information for local coverage between the gateways and may give authority capable of using the same frequency channel in a time division scheme to the plurality of gateways located adjacently to one another.

For example, in the case in which gateways are adjacent to each other (in this case, both of gateways may also transmit data to the same tag), when the gateways simultaneously perform wireless communications, these wireless communications may cause a data collision. Particularly, in the case of update data having a relatively large amount of data for transmission, the occurrence possibility of a data collision becomes higher. Therefore, the update management unit 120 may assign the same frequency channel (for example, a first frequency channel for transmitting the update data) to the adjacent gateways so as to use the same frequency channel in a time division scheme. In addition, in the assigning of the first frequency channel in a time division scheme, the first frequency channel may be assigned so that the gateways do not overlap temporally in terms of operations thereof.

In an embodiment of the present invention, the update management unit 120 may set an operation schedule of at least one or more gateways 200. The foregoing example describes the example in which the same frequency is used in a time division scheme. However, in addition to that, the collision may be prevented by scheduling the operation between the gateways with respect to the transmission of the update data or the transmission of the sleep message as well.

In an embodiment of the present invention, the update management unit 120 may update the product information database 140 by receiving the product information provided from the outside.

The registration management unit 130 may manage a registration of a new tag. To this end, the registration management unit 130 may receive information for the new tag from a terminal for registration and may store the information.

The product information database 140 may store the product information which may be provided to the tag 300. The product information database 140 may be updated by the update management unit 120.

FIG. 3 is a schematic view illustrating an electronic shelf label gateway according to an embodiment of the present invention.

In the embodiment of the present invention, the gateway 200 may perform two main operations. First, the gateway 200 may provide the sleep message to the tag 300. Second, the gateway 200 may wirelessly provide the update data to the tag in an active mode (a wake-up state). Hereinafter, although the embodiment of the present invention describes the case in which the sleep message is generated in the gateway 200, this is for convenience of explanation. Therefore, the sleep message may also be generated by the electronic shelf label server 100 or may be generated, based on the data provided by the electronic shelf label server 100.

Referring to FIG. 3, the gateway 200 may include a communications unit 210, a gateway control unit 220, an update storing unit 230, and a tag information database 240.

The communications unit 210 may communicate with at least one tag 300 through wireless communications. In an embodiment of the present invention, the communications unit 210 may include respective communications modules 211 and 212 in every frequency band.

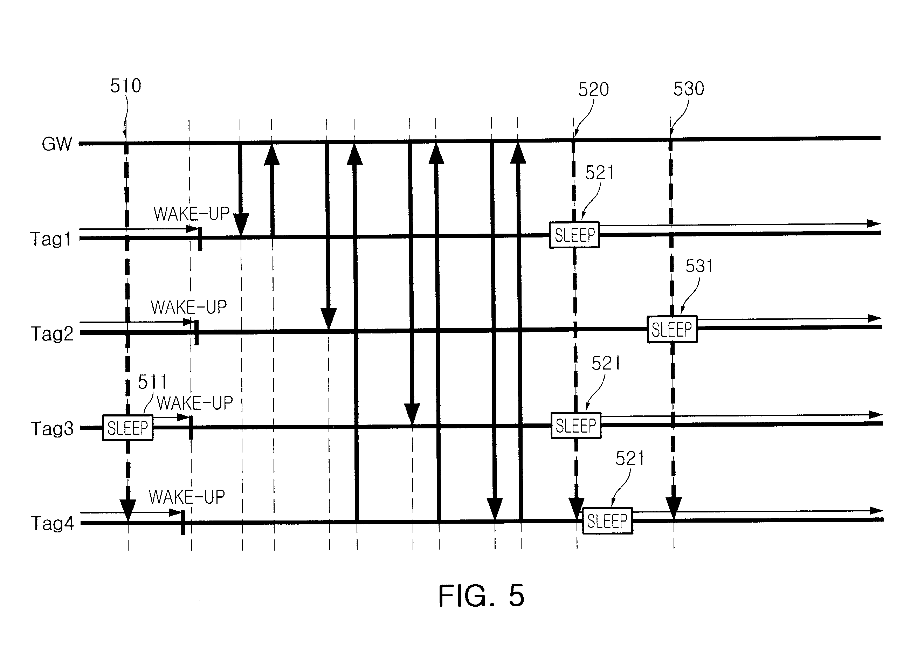

The gateway control unit 220 may control the gateway 200 so that the gateway 200 may provide the sleep message or the update data to the tag 300. Since the embodiments in which the sleep message or the update data are provided may be variously performed, a detailed description thereof will be provided below with reference to FIGS. 5 through 7.

The update storing unit 230 may store the update data provided by the electronic shelf label server 100.

The tag information database 240 may store information for at least one tag 300 managed by the tag information database 240. For example, the tag information database 240 may store information including address identification information of the tag and the like.

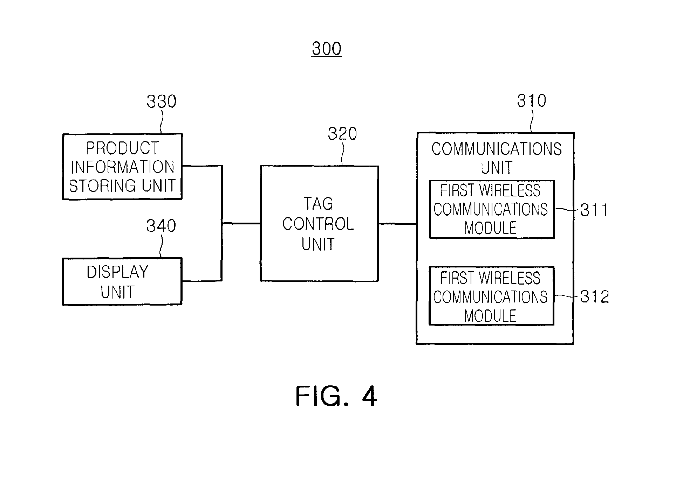

FIG. 4 is a schematic block diagram of an electronic shelf label tag according to an embodiment of the present invention.

Referring to FIG. 4, the electronic shelf label tag 300 may include a communications unit 310, a tag control unit 320, a product information storing unit 330, and a display unit 340.

The communications unit 310 may create a wireless communications environment with the gateway 200. The communications unit 310 may have separate wireless communications modules 311 and 312 in every frequency band, similar to the communications unit 210 of the gateway.

The tag control unit 320 may set itself to be in a sleep mood or an active mode (a wake-up mode) using the sleep message provided by the gateway 200. In addition, the tag control unit 320 may receive the update data provided by the gateway 200 to store the update data in the product information storing unit 330. In relation to this, a detailed description thereof will be provided below with reference to FIGS. 5 through 7.

The product information storing unit 330 may store the update data provided by the gateway 200.

The display unit 340 may display content corresponding to data stored in the product information storing unit 330 to the outside. The display unit 340 may be configured of various display units such as an LED unit, an LCD unit, and the like, but is not limited to a specific unit.

FIGS. 5 through 7 are reference views illustrating transmission of a sleep message or update data performed in the electronic shelf labeling system according to the embodiment of the present invention. Hereinafter, various embodiments for transmitting the sleep message or the update data performed in the electronic shelf labeling system will be described with reference to FIGS. 5 through 7.

FIG. 5 is a reference view illustrating an example in which the sleep message is broadcast to all tags (tags 1 through 4).

As shown in FIG. 5, the gateway GW may broadcast the sleep message to all tags (tags 1 through 4) covered by the GW (510).

Here, the sleep message may include time remaining until a wake-up point. That is, on the assumption that the wake-up point is 60 seconds and a point at which the sleep message is currently broadcast is 40 seconds, the sleep message may include 20 seconds as the time remaining. Therefore, the gateway GW may calculate the time remaining from the current time to the wake-up point and may generate the sleep message including the calculated remaining time.

In an example of FIG. 5, dot line arrows toward the tags 1 through 4 from the gateway GW indicate that the sleep message is provided, and solid line arrows indicate that the update data is to be provided. In addition, 'sleep' indications 511 in horizontal axes of the tags are an indication representing that the corresponding tag is converted into a sleep state.

When the tags 1 through 4 receive the sleep message, the tags 1 through 4 may check the time remaining until the wake-up point included in the sleep message, and may set themselves to be in the sleep mode during the checked time remaining (511). The tags 1 through 4 may change themselves to be in the active mode so as to be awoken, when a point at which they are awakened arrives. As shown in FIG. 5, since the wake-up time is independently calculated in each tag, a small error may occur. However, the gateway may provide the update data in consideration of this error to correct the error.

When the wake-up point arrives, the gateway GW may provide the update data. In the example shown in FIG. 5, all of the tags are target tags to be provided with the update data, and the gateway GW may sequentially provide the update data to the tags 1 through 4. Here, the solid line arrows toward the gateway GW from the tags 1 through 4 refer to an acknowledgement (Ack) transmission representing that the update data has been successfully provided to the tags.

In the case in which the provision of the update data to all of the tags has been completed, the GW may broadcast a new sleep message to all of the tags. That is, the gateway GW may calculate the time remaining from a new wake-up point to the current time and may broadcast the sleep message including the calculated remaining time (520). The tags receiving the above-mentioned sleep message may check the time remaining and may then be set to be in the sleep state (521).

It may be appreciated that the gateway GW periodically re-calculates the time remaining to broadcast the sleep message (530). Here, it can be understood that the tag (the tag 2) which did not receive the sleep message in a previous transmission may be present. Therefore, by the periodic broadcasting, even the tag 2 which does not receive a previous sleep message may calculate time for which the tag 2 should maintain the sleep mode based on new time remaining and may be then converted into the sleep mode (531).

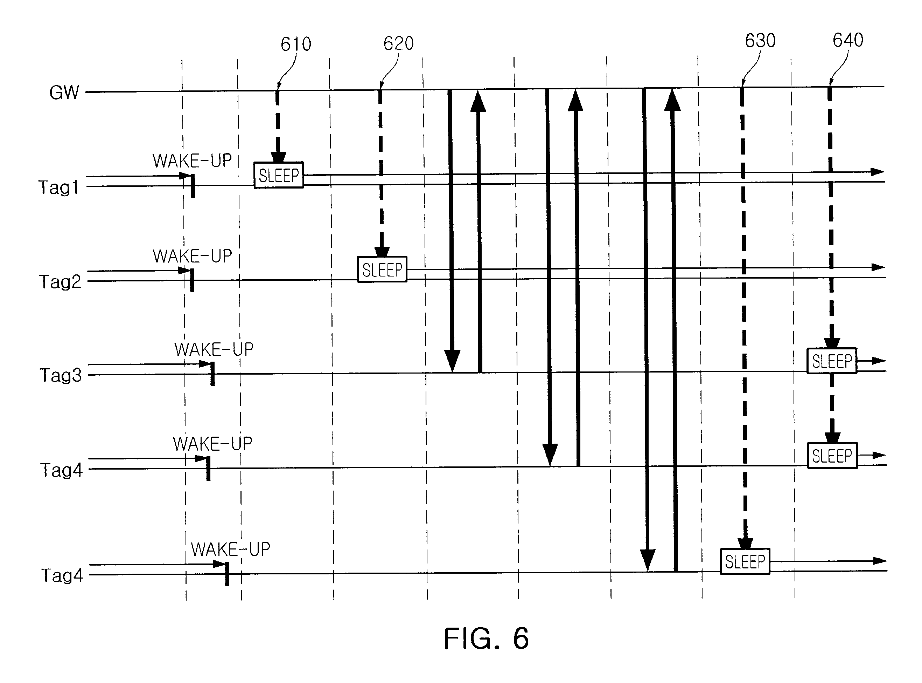

FIG. 6 shows an embodiment in which the remaining tags except for the tags (the update tags) performing the update are first converted into the sleep mode.

When the wake-up point arrives, the gateway GW may divide the tags into update tags (the tags 3 and 5) to which the update data is to be provided and remaining tags (tags 1 and 2) to which the update data is not provided, and may provide the sleep message to the remaining tags (tags 1 and 2) (since the generation of the sleep message is the same as that as described above, this is omitted).

The gateway GW may provide the sleep message to the remaining tags (tags 1 and 2) before performing the update to convert the remaining tags into the sleep mode, and may broadcast the sleep message to the update tags (tags 3 and 5) when the update is completed (610). As described above, the sleep message may be periodically broadcast (620).

In the embodiment shown in FIG. 6, since the tags which are not the target of the update are first set to the sleep mode before updating all of the tags, the active mode (the wake-up state) of the tags may become relatively short. Therefore, power management of the tags may be efficiently performed.

Although FIG. 6 shows an example in which the sleep message is separately provided to the remaining tags (tags 1 and 2), respectively (610 and 620), the sleep message may only be broadcast to the remaining tags (tags 1 and 2).

That is, the gateway GW may check at least one address identification value commonly included in an address of at least one update tag but not included in addresses of the remaining electronic shelf label tags except for the at least one update tag, and may provide the sleep message (or the update data) using the checked at least one address identification value as an identifier.

For example, in the case that the tags 1, 2, 3, 4, and 5 have unique addresses of 100010, 100111, 100101, 101101 and 100000, respectively, since update nodes are 3, 4, and 5 and the remaining nodes are 1 and 2, when the sleep message is broadcast to the remaining nodes, the gateway GW may determine the fifth '1' as being the address identification value common to the remaining nodes 1 and 2 but not common to the update nodes 3 through 5. Therefore, when the sleep message is broadcast, in the case in which dddd1d is used as an address of a recipient (here, d indicates "don't care"), the remaining nodes 1 and 2 only check the corresponding sleep message.

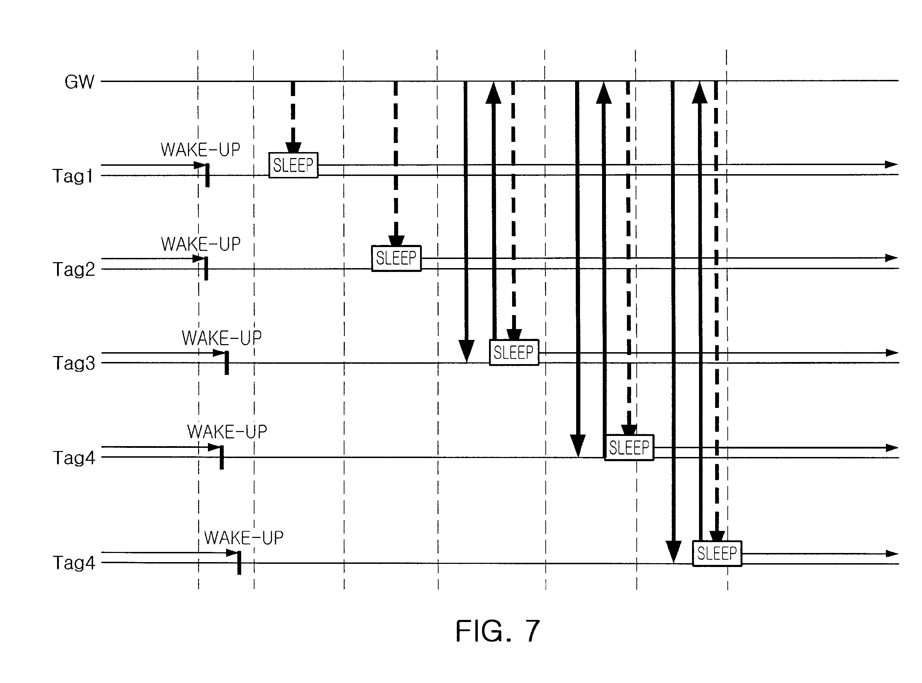

FIG. 7 shows an embodiment providing the sleep message in the case in which the updates are separately completed for the tags performing the update.

That is, in the embodiment of FIG. 6, even the specific update tag completing the update needs to wait until the update for all of the update tags is completed. That is, the sleep messages 610 and 620 for the update tags are provided after completing all of the update.

In FIG. 7, it may be appreciated that the transmission of the update data and the transmission of the sleep message are sequentially performed based on each update tag. In the above-mentioned embodiment, maintaining time of the active mode (the wake-up state) of the update tag may be decreased.

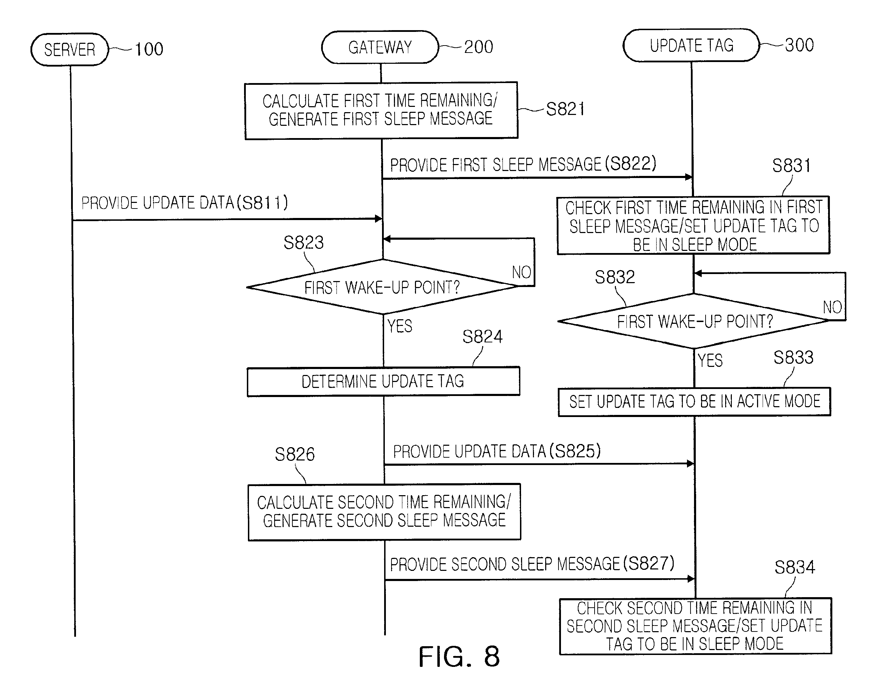

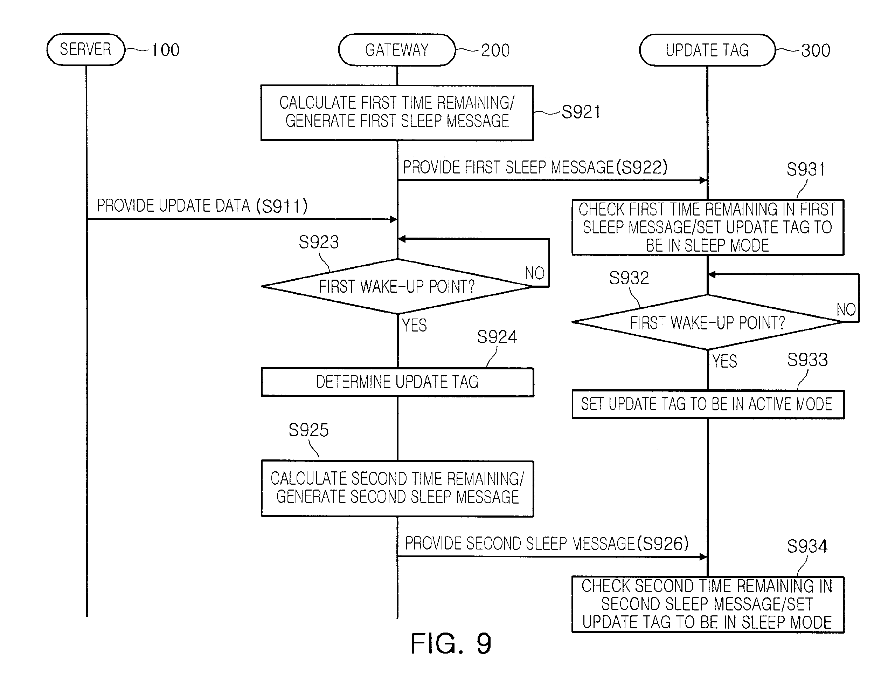

FIGS. 8 and 9 are flow charts illustrating a method of operating an electronic shelf labeling system according to an embodiment of the present invention.

FIG. 8 illustrates the method of operating the electronic shelf labeling system targeting the update tag and FIG. 9 illustrates the method of operating the electronic shelf labeling system targeting other tags except for the update tag.

Hereinafter, the specific embodiments of the transmission of the sleep message and the update tag between the gateway 200 and the tag 300 as described above with reference to FIGS. 5 through 7 will be omitted. However, the method of operating the electronic shelf labeling system according to the embodiment of the present invention may be performed using the various embodiments described in FIGS. 5 through 7.

Referring to FIG. 8, the gateway 200 may calculate the time remaining (a first time remaining) until a first wake-up point to generate a first sleep message (S821). The gateway 200 may provide the generated first sleep message to the tags (S822). According to the embodiment of the present invention, the gateway 200 may multicast the first sleep message to at least a portion of the tags or may broadcast the first sleep message to all of the tags.

In the case in which the update tag 300 receives the first sleep message, the update tag 300 may check the first time remaining. The update tag 300 may set itself to be in the sleep mode during the checked first time remaining (S831).

The update tag 300 may change itself to be in the active mode, when the first wake-up point arrives (S833).

The gateway 200 may also check whether or not the first wake-up point arrives (YES in S823) and may determine the tag in which the update is performed (S824). Here, the tag in which the update is performed using the update data may be determined (S811) provided by the server 100.

The gateway 200 may provide the update data to the determined update tag 300 (S825), and may calculate a second time remaining for a second wake-up point to generate a second sleep message (S826). The gateway 200 may provide the generated second sleep message to the update tag (300).

In the case in which the update tag 300 receives the second sleep message, the update tag 300 may check the second time remaining and may set itself to be in the sleep mode during the checked second time remaining (S834).

Referring to FIG. 9, FIG. 9 shows an example in which the gateway 200 provides the sleep message to the remaining tags 300.

Since a description of FIG. 9 is the same as that of FIG. 8, except for the providing of the update tag, an overlapped description thereof will be omitted.

As set forth above, according to the embodiment of the present invention, the tag power may be efficiently managed and the frequency band may be efficiently managed by using the sleep command including the time remaining until the wakeup point.

While the present invention has been shown and described in connection with the embodiments, it will be apparent to those skilled in the art that modifications and variations can be made without departing from the spirit and scope of the invention as defined by the appended claims.

## Claims

1. A method of operating an electronic shelf labeling system performed in an electronic shelf label gateway capable of wirelessly communicating with a plurality of electronic shelf label tags and providing data provided by an electronic shelf label server to the plurality of electronic shelf label tags, the method comprising:
providing, to the plurality of electronic shelf label tags, a first sleep message including time remaining until a first wake-up point;
selecting at least one update tag to which update data is to be provided, from the plurality of electronic shelf label tags; and
when the first wake-up point arrives, providing, to the least one update tag, the update data and a second sleep message including time remaining until a second wake-up point.

2. The method of claim 1, wherein the providing of the first sleep message includes:
calculating the time remaining from a current time to the first wake-up point;
generating the first sleep message including the calculated remaining time; and
broadcasting the generated first sleep message to the plurality of electronic shelf label tags.

3. The method of claim 1, wherein the providing of the second sleep message includes:
sequentially providing the update data to the respective at least one update tag; and
broadcasting, to the plurality of electronic shelf label tags, the second sleep message including the time remaining from the current time to the second wake-up point.

4. The method of claim 3, wherein the providing of the second sleep message further includes repeatedly broadcasting the second sleep message at a predetermined interval of time.

5. The method of claim 1, wherein the providing of the second sleep message includes sequentially providing the update data and the second sleep message to the respective at least one update tag.

6. The method of claim 1, wherein the providing of the second sleep message includes providing, to electronic shelf label tags among the plurality of electronic shelf label tags with the exception of the update tag, the second sleep message including the time remaining from the current time to the second wake-up point.

7. The method of claim 1, wherein the providing of the second sleep message includes:
checking at least one address identification value commonly included in an address of the least one update tag but not included in addresses of the electronic shelf label tags with the exception of the at least one update tag; and
providing the update data or the second sleep message using the at least one address identification value as an indentifier.

8. An method of operating an electronic shelf labeling system performed in an electronic shelf label tag capable of wirelessly communicating with an electronic shelf label gateway and storing data provided by an electronic shelf label server through the electronic shelf label gateway, the method comprising:
checking time remaining until a wake-up point included in a sleep message when receiving the sleep message;
setting the electronic shelf label tag to be in a sleep mode during the checked time remaining; and
changing the electronic shelf label tag to be in an active mode when a point at which the electronic shelf label tag is awakened arrives.

9. The method of claim 8, wherein the changing of the electronic shelf label tag to be in the active mode includes:
calculating the point at which the electronic shelf label tag is awakened, using reception time of the sleep message and the time remaining; and
changing the electronic shelf label tag to be in the active mode when current time reaches the point at which the electronic shelf label tag is awakened.

10. The method of claim 8, wherein the changing of the electronic shelf label tag to be in the active mode includes:
subtracting the time remaining from the reception time of the sleep message; and
when the time remaining becomes zero, changing the electronic shelf label tag to be in the active mode.

11. The method of claim 8, further comprising checking an address identification value included in the received sleep message or update data and ignoring the received sleep message or update data when the address identification value does not correspond to an address of the electronic shelf label tag.

12. An electronic shelf labeling system, comprising:
a plurality of electronic shelf label tags setting themselves to be in a sleep mode or an active mode, using time remaining until a wake-up point included in a received sleep message;
at least one gateway generating and providing the sleep message, and wirelessly providing update data to the electronic shelf label tag in the active mode; and
an electronic shelf label server providing the update data to the at least one gateway and setting operation scheduling of the at least one gateway.

13. The electronic shelf labeling system of claim 12, wherein the electronic shelf labeling system transmits the sleep message and the update data using different frequency channels, and
wherein the electronic shelf label server assigns a first frequency channel for transmitting the update data, to a plurality of gateways in a time-division scheme, when the gateway is provided in plural.

14. The electronic shelf labeling system of claim 12, wherein the electronic shelf labeling system performs wireless communications in a ZigBee scheme and provides the update data in a top-down scheme in which the update data is provided to the electronic shelf label tags via the gateway from the electronic shelf label server.

15. The electronic shelf labeling system of claim 12, wherein the gateway selects at least one update tag to which the update data is to be transmitted from the plurality of electronic shelf label tags and transmits the update data by using an address identification value common to the selected at least one update tag, and broadcasts a sleep message including time remaining until a new wake-up point to electronic shelf label tags with the exception of the at least one update tag to which the update data is to be transmitted.
